# EUROPEAN PATENT APPLICATION

(11) **EP 3 842 882 A1**
(43) Date of publication of application: **30.06.2021**
(21) Application number: 19219235.9
(22) Date of filing: 23.12.2019
(51) Int. Cl.: G05B 19/418, H04L 12/18

(54) **METHOD FOR PUBLISHING DATA FROM A PLURALITY OF CONTROL SYSTEMS AND A DATA AGGREGATION INTERFACE THEREFOR**

(71) Applicant: Siemens Aktiengesellschaft, 80333 München (DE); Siemens Technology And Services Pvt. Ltd., 400018 Mumbai (IN)
(72) Inventor: Rangapura Shettappa, Chandrashekara, 91058 Erlangen (DE); Athmanathan, Balakrishnan, 560021 Bangalore (IN)
(74) Representative: Maier, Daniel Oliver

(57) **Abstract**

The present disclosure describes a method for aggregating and publishing data across the multiple control systems in an industrial facility. The method comprises receiving process data from a first control system, transforming the process data from a first format to a common data format, in accordance to a first information model associated with the first control system, storing the process data in a first data repository, broadcasting an attribute list to a plurality of subscriber devices, receiving a subscription request from a subscriber device in relation to a first data attribute, and publishing data values associated with the first data attribute from the stored process data to the subscriber device. The attribute list comprises a plurality of data attributes associated with the first control system. The common data format comprises a plurality of data attributes based on the first information model.

## Description

### Background

The current disclosure relates to control systems and more particularly, to control systems in complex industrial environments. Often, industrial facilities have a plurality of control systems used for controlling various industrial processes via a plurality of industrial devices and applications. These control systems generate data in different formats and store the same in their respective data stores.

### Description

The current disclosure relates to control systems and more particularly, to control systems in complex industrial environments or facilities.

In complex industrial environments, especially mining environments, a plurality of control systems is used for control and regulation of industrial processes. Often, these control systems are unconnected and generate data in different formats. Accordingly, it is often a complex and difficult task to consolidate data in such environments. In industrial facilities, often there are several industrial processes which take considerable time in execution and accordingly, workflow optimization is required in order to improve efficiency. However, with conventional control systems, workflow optimization is not optimal and is often limited to the data available in the corresponding control system.

Similarly, fault analysis and failure detection take considerable time, as it is complex to access to information across the plurality of control systems and require substantial effort. Since data stored in a wide range of formats in unrelated context, data is rarely compiled or presented in a meaningful way, accordingly, causing frustration and difficulty. This results in a negative impact to production throughput and revenue loss. Therefore, optimization and other such data analytics in such environments is often challenging.

The current disclosure addresses the issues discussed above by disclosing a method in accordance to claim 1, a data aggregation interface according to claim 8 and a non-transitory storage medium according to claim 12.

Accordingly, the current disclosure proposes a method for publishing data from the multiplicity of control systems in an industrial facility. The control systems comprise one or more control devices for regulating one or more industrial processes in the industrial facility. The method comprises receiving process data from a first control system, transforming the process data from a first format to a common data format, in accordance to a first information model associated with the first control system, storing the process data in a first data repository, broadcasting an attribute list to a plurality of subscriber devices, receiving a subscription request from a subscriber device in relation to a first data attribute, and publishing data values associated with the first data attribute from the stored process data to the subscriber device. The attribute list comprises a plurality of data attributes associated with the first control system. The common data format comprises a plurality of data attributes based on the first information model. The process data is associated with a first industrial process regulated by the first control system.

Accordingly, the current disclosure provides for easy exchange of data amongst the various systems in the industrial facility by collecting and publishing data from the various control systems in a common format. Additionally, despite the use of different information models, harmonization of data is now easily enabled without human intervention.

In an example, the method further comprising authenticating the subscriber device based on the subscription request. The subscription request contains a digital signature associated with the subscriber device. Based on the digital signature, the data aggregation interface, verifies if the subscriber device is a trusted device. Thereby, a secure manner for publishing data across the various devices is provided.

In an example, the method further comprises removing noise from one or more data values associated with one or more data attributes and analyzing the data values associated with one or more data attributes to identify one or more patterns. The one or more patterns are for training an estimation model. Accordingly, the data aggregated in the first repository is analyzed for developing prediction models.

In an example, the first data repository is hosted on a cloud service. This enables access to devices outside of the industrial facility as well. In an example, the common data format is based on one of Extensible Markup Language (XML) and Java Script Object Notation (JSON). Since these are well known open data formats, data exchange amongst various devices and applications is simplified.

In an example, the first information model associated with the first control system includes one or more data objects associated with one or more devices associated with the first industrial process. The one or more data objects are arranged in hierarchical structure based on topology associated with the first industrial process and each data objects comprises one or more data attributes from the plurality of data attributes.

In an example, each control system from the plurality of control systems comprise one or more control devices for regulating at least one industrial process in the industrial facility.

In another aspect, the current disclosure describers a data aggregation interface for publishing data from a plurality of control systems in an industrial facility. The data aggregation interface comprises a network interface connected to the plurality of control systems for receiving process data associated with a first industrial process regulated by a control system from the plurality of control systems, one or more processors connected to a memory module storing one or more instructions. The one or more processors on execution of the one or more instructions, are configured to receive process data from a control system, transform the process data from a first format to a common data format, based on a first information model associated with the first control system, store the process data in a first data repository, broadcast an attribute list to a plurality of subscriber devices, receive a subscription request from a subscriber device in relation to a first data attribute, and publish data values associated with the first data attribute from the stored process data to the subscriber device.

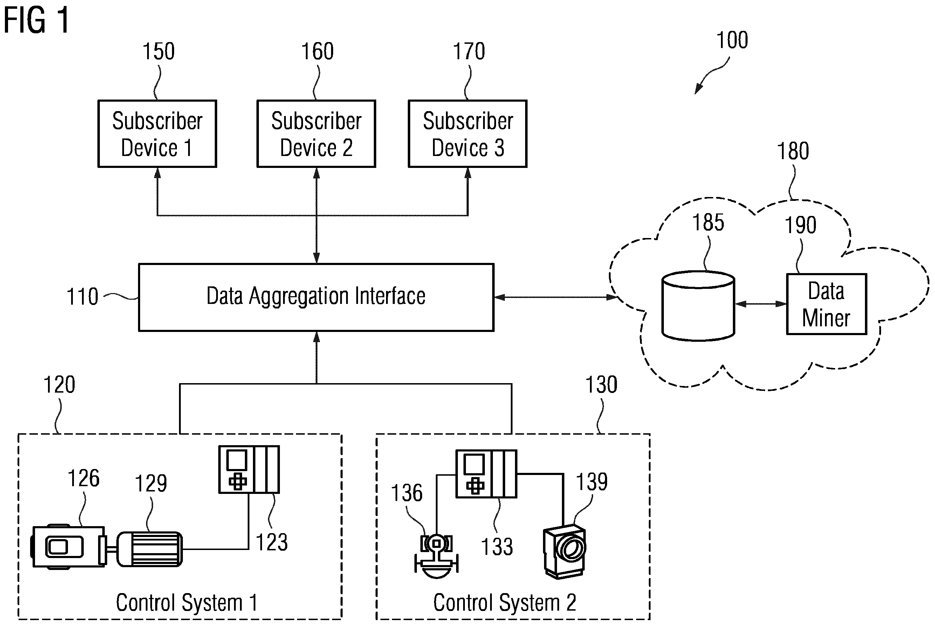

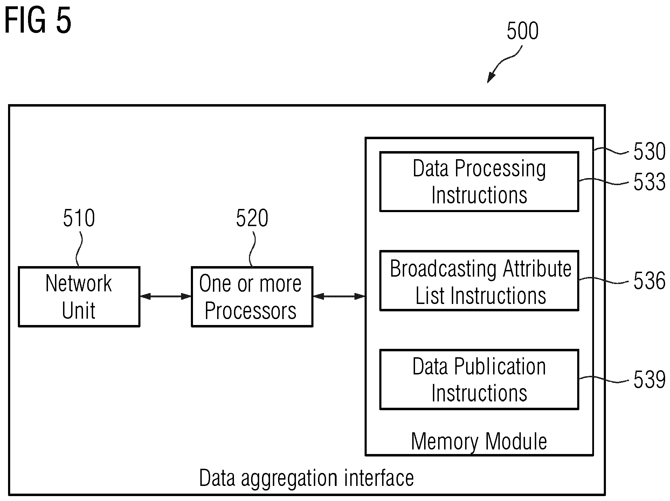

In another aspect, the current disclosure describes a non-transitory storage medium for publishing data from a plurality of control systems in an industrial facility. The control systems comprise one or more control devices for regulating one or more industrial processes in the industrial facility. The non-transitory storage medium has a plurality of machine-readable instructions stored therein, which when executed by one or more processors, cause the one or more processors to receive process data from a control system, transform the process data from a first format to a common data format, based on a first information model associated with the first control system, store the process data in a first data repository, broadcast an attribute list to a plurality of subscriber devices, receive a subscription request from a subscriber device in relation to a first data attribute and publish data values associated with the first data attribute from the stored process data to the subscriber device. These aspects are further described in relation to figures 1-5.

The following detailed description references the drawings, wherein:
Figure 1 illustrates an example industrial facility including a plurality of control systems;
Figure 2 illustrates an example method for publishing data from the plurality of control systems;
Figure 3 illustrates an example nested structure of data objects of a drive system in the industrial facility;
Figure 4 illustrates an example snapshot of data attributes and data values of the motor in JSON format;
Figure 5 illustrates an example data aggregation interface for publishing data from the plurality of control systems; and
Figure 6 illustrates an example mining facility comprising a plurality of control systems.

Figure 1 illustrates an industrial facility 100. Industrial facility herein refers to any environment where one or more industrial processes such as manufacturing, refining, smelting, assembly of equipment may take place and includes process plants, oil refineries, automobile factories, etc. The industrial facility 100 comprises a plurality of control systems (shown in the figure as control system 120 and control system 130). In an example, each control system comprises a plurality of control devices connected to a plurality of field devices for monitoring and regulating one or more industrial processes in the industrial facility 100. For example, as shown in as shown in figure 1, the control system 120 is a process control system and includes a controller 123 for regulating the operation of a drive train including gearbox 126 and motor 129, for driving a conveyor belt in the industrial facility 100. Similarly, as shown in figure 1, the control system 130 is an electrical control system and includes a controller 133 connected to sensors 136 and 139 for regulating the operation of a backup generator in the industrial facility 100.

The control systems 120 and 130 are connected to a data aggregation interface 110. The data aggregation interface 110 receives process data from the control systems in various formats and stores in the data in a common format on a data repository 185. The data aggregation interface 110 then publishes the list of attributes in the stored data to any and all subscriber devices. Subscriber devices (shown in the figure as subscriber devices 150, 160 and 170) can then subscribe to the data aggregation interface 110 for receiving data in relation to one or more data attributes of interest.

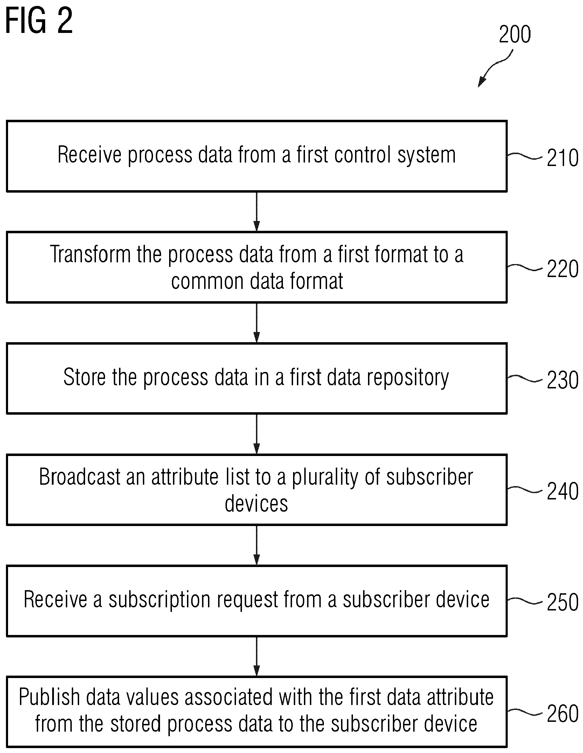

Accordingly, the data aggregation interface 110 enables consolidation of process data from different control systems. In an embodiment, the data aggregation interface 110 is also connected to a data miner 190. The data miner 190 is hosted on a cloud platform 180 and is configured to perform data analytics on the process data stored in the data repository 185. In an embodiment, the data miner 190 is configured to determine correlations and patterns in the process data for prediction of the condition of the processes and devices in the industrial facility 100. These aspects are explained further in relation to figure 2.

Figure 2 illustrates a method 200 for publishing data from the plurality of control systems 120 and 130. At step 210, the data aggregation interface 110 receives process data from a first control system 120. The process data is associated with a first industrial process regulated by the first control system 120. In an embodiment, the process data includes a device tag or identifier associated with a first device.

For example, as mentioned above, the first control system 120 is associated with control of a conveyor system in the industrial facility 100. Accordingly, the first control system 120 includes a controller 123 for regulating a drive system comprising a gear box 126 and motor 129, connected to the conveyor system. Additionally, the first control system 120 additionally includes a plurality of sensors deployed on the motor 129 and the gearbox 126. One or more sensors are mounted on fixed bearing and pinion shaft bearing of the gearbox 126 for measuring vibration and temperature of the bearings. Similarly, one or more sensors are mounted on the motor bearing for measuring vibration and temperature of the motor bearing of the motor 129. Additionally, one or more sensors are mounted on the motor 129 for measuring for measuring temperature, current and voltage of the motor windings (stator and rotor) of the motor 129. Accordingly, in an example, process data herein refers sensor tags of the sensors on the gearbox and vibration and temperature data of the gear box 126, and sensor tags of the sensors on the motor and vibration, temperature, current and voltage data of the motor 129. In an embodiment, process data includes a sensor tag and a plurality of associated sensor data and associated time stamps.

At step 220, the data aggregation interface 110 transforms or converts process data from a first format to a common data format in accordance to a first information model associated with the first control system. Common data format herein refers to a standard data format such as extensible mark-up language (XML), JavaScript Object Notation (JSON), etc. In an embodiment, the common data format is a key value pair based text format. Each key is one of a data object or data attribute. A data object is associated with an industrial entity and data attributes are associated with the properties of industrial entity. Each value or data value is associated with a condition or measurement value associated with the industrial entity.

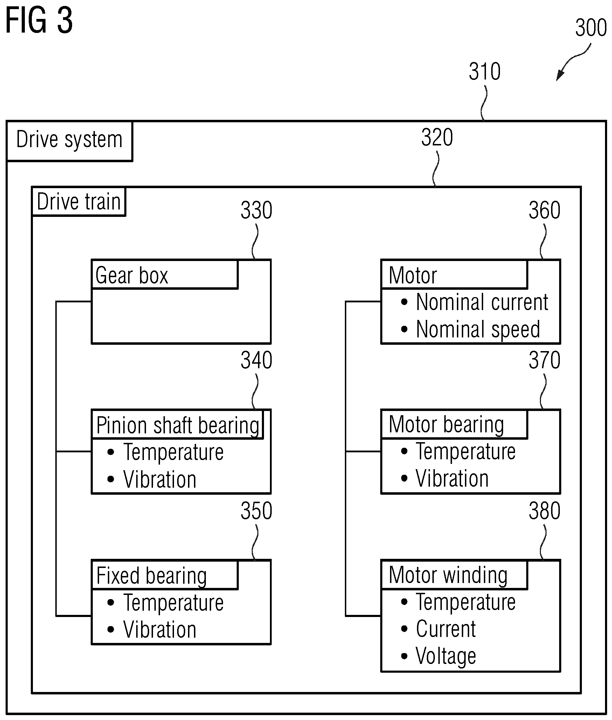

In an embodiment, the common data format includes a hierarchical or nested structure of data objects indicative of the topology of the components (i.e. systems and devices) in the industrial facility 100. For example, each data object associated with a first entity comprises one or more data attributes associated with one or more properties with the first entity and one or more data objects associated with one or more components of the first entity. This is further illustrated using an example shown in figure 3.

Figure 3 illustrates an example hierarchical or nested structure 300 of the data objects of an example common data format. As shown in figure 3, data object 310 is associated with a drive system. The drive system object 310 comprises a drive train object 320. The drive train object 320 is associated with an actual drive train controlled by the first control system. Accordingly, similar to the drive train, the drive train object 320 comprises a gearbox object 330 and a motor object 360. As shown in figure 3, data object 360 is associated with the motor 129. Accordingly, the motor object 360 comprises two data attributes and two data objects: a first attribute associated with nominal speed of the motor 129, a second attribute associated with nominal current of the motor 129, a first data object 370 associated with motor bearing and a second data object 380 associated with motor winding. The data object 370 of the motor bearing further comprises a first attribute associated with temperature of the motor bearing, and a second attribute associated with vibration of the motor bearing. Similarly, the data object 380 of the motor winding comprises a first attribute associated with temperature of the motor winding, a second attribute associated with current of the motor winding and a third attribute associated with voltage of the motor winding. Similarly, the gearbox object 330 comprises two data objects: a first data object 340 associated with a pinion shaft bearing and a second data object 350 associated with a fixed bearing. The data object 340 of the pinion shaft bearing further comprises a first attribute associated with temperature of the pinion shaft bearing, and a second attribute associated with vibration of the pinion shaft bearing. Similarly, the data object 350 of the fixed bearing comprises a first attribute associated with temperature of the fixed bearing, and a second attribute associated with current of the fixed bearing.

In an embodiment, the data objects and the data attributes of common data format are populated based on the information models associated with the one or more control systems (120 and 130). Information model describes various entities and devices, information processes and data flows of the corresponding control system. In an embodiment, the information model associated with the first control system includes a hierarchical arrangement of plurality of data objects (also referred to as data entities) associated with plurality of devices associated with the first control system. The plurality of data objects are organized in a hierarchical manner as per the topology of the industrial facility. Topology herein refers to the asset architecture in the industrial facility and may be based on various engineering artifacts such as P&I diagrams, control logic, etc.

Each data object corresponds to a corresponding device and has one or more data attributes related to the corresponding device. In an embodiment, each data object includes tags of sensors measuring one or more properties of the corresponding device. For example, the data object of a motor includes tags of current and voltage sensors measuring voltage and current in the stator winding of the motor, in addition to the voltage and current related data attributes. Based on the information models of the various control systems, the data objects and data attributes of the common data format are populated. In an embodiment, information model associated with a control system defines the data structure of the first format associated with the corresponding control system.

Based on the first information model, the data aggregation interface 110 converts the process data from the first format to the common data format. Based on the information model, the data aggregation interface 110 identifies the device tag in the process data. Then, based on the information model, the data aggregation interface 110 determines the data object and the data attribute against which the data is to be stored. Accordingly, the data aggregation interface 110 determines the data attributes and the data values from the received process data based on the information model associated with the first control system 120.

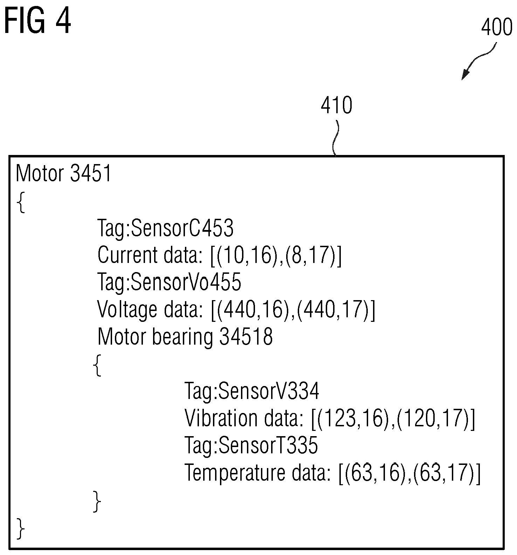

For example, in relation to current sensor from a motor, the process data includes a sensor tag associated with the current sensor and plurality of measurement values with timestamps. Based on the information model associated with control system controlling motor, the data aggregation interface 110 determines the data type associated with the measurement values. Additionally, based on the information model and the sensor tag in the process data, the data aggregation interface 110 determines the corresponding data object and the data attribute where the measurement values are stored. For example, as shown in figure 4, the motor data object 3451 includes a data tag attribute for sensor tag 'C453' associated with the current sensor on the motor and data attribute for storing current data. Accordingly, the data aggregation interface 110 determines the motor object based on the sensor tag in the process data and stores the measurements values in the data attribute current data.

At step 230, the data aggregation interface 110 stores converted process data in a first data repository 185. In an embodiment, the first data repository 185 is hosted on a cloud platform or a cloud service 180 and may be accessed via the Internet. Then at step 240, the data aggregation interface 110 broadcasts an attribute list to a plurality of subscriber devices. The attribute list includes the plurality of data attributes associated with the one or more control systems. The attribute list indicates to the subscriber devices the list of data attributes in relation which the data aggregation interface 110 has data in relation to. In an example, the attribute list includes the tags of the related objects associated with the data attributes. For example, in the attribute list circulated, includes current data attribute and tags of the motor device. Subscriber devices herein refers one or more operator and enterprise devices and for example are used for management and execution systems.

Then at step 250, the data aggregation interface 110 receives a subscription request from a first subscriber device 150 in relation to a first data attribute. Upon receiving a subscription request, in an example, the data aggregation interface authenticates the subscription request to verify if the first subscriber device 150 is a valid subscriber device.

Then, at step 260, the data aggregation interface 110 publishes data values in relation to the first data attribute to the first subscriber device 150. In an example, the data aggregation interface 110 upon receiving process data from either of the first and second control systems (120 or 130), checks if the process data includes first data attribute or data values in the first data attribute, and sends the data values associated with the first data attribute to the first subscriber device 150.

In an example, the data miner 190 removes noise from one or more data values associated with one or more data attributes; and analyzes the data values associated with one or more data attributes to identify one or more patterns. The one or more patterns are for training an estimation model. For example, the data miner 190 is capable of training a ball bearing life estimation neural network based model based on vibration data from the process data of the vibration sensor on the motor bearing. In an example, the data miner 190 removes data points outside a predefined range and normalizes the vibration data from the vibration sensor using a linear normalization technique. Then the normalized data is divided into multiple windows or segments of the normalized vibration data. Then, the segments of the normalized vibration data are transformed from time domain to frequency domain using a fast Fourier transform. Then the transformed segments are provided to the two-layer neural network model.

In an embodiment, the two-layer neural network is trained for classifying the transformed data for detecting a condition of the ball bearing of a motor.

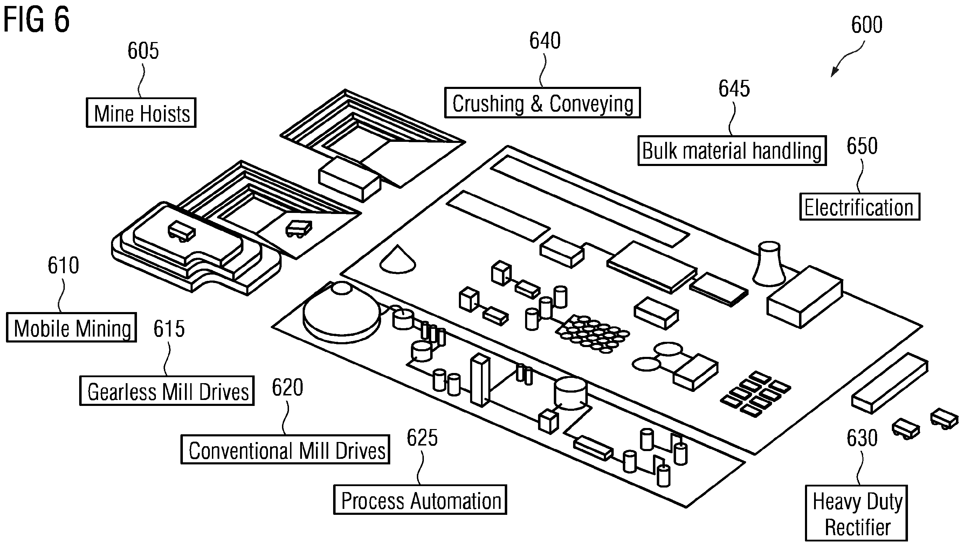

In particular, the industrial facility 100 is a mining facility comprising a plurality of stages and devices to perform various tasks. As shown in figure 6, there are several stages in the mining facility which are spread across expanse geography and have a several multitube of data points. For example, mining facility includes mine hoists 605 that contains mine winders; crushing & conveyor systems 640 contain gearless and conventional conveyers and crushers; mobile mining systems 610 containing mining trucks; mill drive systems containing gearless mill drives 615 and conventional mill drives 620, process control systems 625 for control various process applications, heavy duty rectifiers 630 for use in electrolytic refining and various other chemical process, electrical control systems 650 comprising of switch gears, protection relays, bulk material handling systems 645 including chain excavators, ship loaders and unloaders, etc. Additionally, there are lot of such applications for various levels in each stage like field level, control level, operator level, management level, application level, etc. The data aggregation interface 110 enables seamless data transfer amongst all these levels and stages for improving efficiency.

For example, it is always essential for electromagnetic procedures to have an electric current available and at optimal quality. A short unnotified interruption in power supply can mean a complete standstill of the plant and may result in loss of productivity. For storing data from the electrical control system with the process control system in a common data format, the data aggregation interface 110 provides for easy data transfer amongst the two control systems to prevent unnotified interruptions in power.

The present disclosure can take a form of a computer program product comprising program modules accessible from computer-usable or computer-readable medium storing program code for use by or in connection with one or more computers, processing units, or instruction execution system. For example, the data aggregation interface 110 may be realized across one or more devices.

Accordingly, the current disclosure as describes a data aggregation interface 500. The data aggregation 500 includes a network interface 510, one or more processors 520 and a non-transitory storage medium 530. The non-transitory storage medium 530 contains a plurality of instructions (533, 536 and 539) for publishing data from the plurality of control systems (120, 130) in the industrial facility (100).

Upon execution of the data processing instructions 533, the one or more processors 520 receive process data from a first control system 120 via network interface 510, transform the process data from the first format to the common data format, and store the process data in the first data repository 185. Then, upon execution of the broadcasting attribute list instructions 536, the one or more processors 520 broadcast an attribute list to a plurality of subscriber devices (150, 160, 170). Subsequent to the broadcasting of the attribute list, the one or more processors 520 receive a subscription request from a first subscriber device 150 in relation to a first data attribute. Then, upon execution of the data publication instructions 539, the one or more processors 520 publish data values associated with the first data attribute from the stored process data to the subscriber device 150.

While the current disclosure describes the data aggregation interface 500 as an independent component or device, the data aggregation interface 500 may be a software component and may be realized within the control system 120 or 130. For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non transitory storage medium claims.

## Claims

1. A method (200) of publishing data from a plurality of control systems (120, 130) in an industrial facility (100), the control systems (120, 130) comprising one or more control devices (123, 133) for regulating one or more industrial processes in the industrial facility (100), the method (200) comprising:
a. receiving (210) process data from a first control system (120), the process data associated with a first industrial process regulated by the first control system (120);
b. transforming (220) the process data from a first format to a common data format, based on a first information model associated with the first control system (120), wherein the common data format comprises a plurality of data objects and data attributes based on the first information model
c. storing (230) the process data in a first data repository (185);
d. broadcasting (240) an attribute list to a plurality of subscriber devices (150, 160, 170), the attribute list comprising the plurality of data attributes associated with the first control system;
e. receiving (250) a subscription request from a subscriber device (150) in relation to a first data attribute; and
f. publishing (260) data values associated with the first data attribute from the stored process data to the subscriber device (150).

2. The method (200) as claimed in any of the preceding claims, the method (200) further comprising authenticating the subscriber device (150) based on the subscription request, wherein the subscription request contains a digital signature associated with the subscriber device (150) .

3. The method (200) as claimed in any of the preceding claims, wherein the first data repository (185) is hosted on a cloud service (180).

4. The method (200) as claimed in any of the preceding claims, wherein the method (200) further comprises:
a. removing noise from one or more data values associated with one or more data attributes; and
b. analyzing the data values associated with one or more data attributes to identify one or more patterns, wherein the one or more patterns are for training an estimation model.

5. The method (200) as claimed in any of the preceding claims, wherein the common data format is based on one of Extensible Markup Language (XML) and Java Script Object Notation (JSON).

6. The method (200) as claimed in any of the preceding claims, wherein the first information model associated with the first control system (120) includes one or more data objects associated with one or more devices associated with the first industrial process, and wherein the one or more data objects are arranged in hierarchical structure based on topology associated with the first industrial process and each data objects comprises one or more data attributes from the plurality of data attributes.

7. The method (200) as claimed in any of the preceding claims, wherein each control system from the plurality of control systems comprise one or more control devices (123, 133) for regulating at least one industrial process in the industrial facility (100).

8. A data aggregation interface (500) for publishing data from a plurality of control systems (120, 130) in an industrial facility (100), the control systems (120, 130) comprising one or more control devices (123, 133) for regulating one or more industrial processes in the industrial facility (100), the data aggregation interface (500) comprising:
a. a network interface (510) connected to the plurality of control systems(120, 130) for receiving process data associated with a first industrial process regulated by a control system (120) from the plurality of control systems (120, 130);
b. one or more processors (520) connected to a memory module (530) storing one or more instructions, wherein the one or more processors (520) on execution of the one or more instructions, are configured to
i. receive process data from a control system (120), the process data associated with a first industrial process regulated by the first control system (120);
ii. transform the process data from a first format to a common data format, based on a first information model associated with the first control system (120), wherein the common data format comprises a plurality of data objects and data attributes based on the first information model;
iii. store the process data in a first data repository (185);
iv. broadcast an attribute list to a plurality of subscriber devices (150, 160, 170), the attribute list comprising the plurality of data attributes associated with the first control system;
v. receive a subscription request from a subscriber device (150) in relation to a first data attribute; and
vi. publish data values associated with the first data attribute from the stored process data to the subscriber device (150).

9. The data aggregation interface (500) as claimed in any of the preceding claims, wherein the first data repository (185) is hosted on a cloud service (180).

10. The data aggregation interface (500) as claimed in any of the preceding claims, wherein the common data format is based on one of Extensible Markup Language (XML) and Java Script Object Notation (JSON).

11. The data aggregation interface (500) as claimed in any of the preceding claims, wherein the first information model associated with the first control system (120) includes one or more data objects associated with one or more devices associated with the first industrial process, and wherein the one or more data objects are arranged in hierarchical structure based on topology associated with the first industrial process and each data objects comprises one or more data attributes from the plurality of data attributes.

12. A non-transitory storage medium (530) for publishing data from a plurality of control systems (120, 130) in an industrial facility (100), the control systems (120, 130) comprising one or more control devices (123, 133) for regulating one or more industrial processes in the industrial facility (100), the non-transitory storage medium having machine-readable instructions stored therein, which when executed by one or more processors (520), cause the one or more processors (520) to:
a. receive process data from a control system (120), the process data associated with a first industrial process regulated by the first control system (120) ;
b. transform the process data from a first format to a common data format, based on a first information model associated with the first control system (120), wherein the common data format comprises a plurality of data objects and data attributes based on the first information model;
c. store the process data in a first data repository (185) ;
d. broadcast an attribute list to a plurality of subscriber devices (150, 160, 170), the attribute list comprising the plurality of data attributes associated with the first control system;
e. receive a subscription request from a subscriber device (150) in relation to a first data attribute; and
f. publish data values associated with the first data attribute from the stored process data to the subscriber device (150).
